(19) Europäisches Patentamt
European Patent Office
Office européen des brevets

(11) Veröffentlichungsnummer: **0 144 506 B1**

(12) # EUROPÄISCHE PATENTSCHRIFT

(45) Veröffentlichungstag der Patentschrift: **06.03.91**

(51) Int. Cl.⁵: **C01B 3/26**, C01B 3/32, B01J 23/40, B01J 23/56, B01J 37/02

(21) Anmeldenummer: **84107721.7**

(22) Anmeldetag: **03.07.84**

Die Akte enthält technische Angaben, die nach dem Eingang der Anmeldung eingereicht wurden und die nicht in dieser Patentschrift enthalten sind.

(54) **Katalysator zur Herstellung von Synthesegas bzw. von Wasserstoff und Verfahren zu dessen Herstellung.**

(30) Priorität: **09.11.83 DE 3340569**

(43) Veröffentlichungstag der Anmeldung:
**19.06.85 Patentblatt 85/25**

(45) Bekanntmachung des Hinweises auf die Patenterteilung:
**06.03.91 Patentblatt 91/10**

(84) Benannte Vertragsstaaten:
**BE DE FR GB IT NL**

(56) Entgegenhaltungen:
**US-A- 4 175 115**
**US-A- 4 350 613**
**US-A- 4 367 166**
**US-A- 4 413 152**
**US-A- 4 511 673**

**PATENT ABSTRACTS OF JAPAN, Band 7, Nr. 155 (C-175)[1300], 7. Juli 1983; & JP - A - 58 067 344 (NISSAN JIDOSHA) 21.04.1983**

(73) Patentinhaber: **SÜD-CHEMIE AG**
**Lenbachplatz 6**
**W-8000 München 2(DE)**

(72) Erfinder: **Schneider, Michael, Dr.**
**Waldparkstrasse 54**
**W-8012 Ottobrunn-Riemerling(DE)**
Erfinder: **Kochloefl, Karl, Dr.**
**Kreuzstrasse 2**
**W-8052 Moosburg(DE)**
Erfinder: **Bock, Ortwin**
**Enzianstrasse 16a**
**W-8300 Landshut(DE)**

(74) Vertreter: **Reitzner, Bruno, Dr. et al**
**Patentanwälte Dipl.-Ing. R. Splanemann Dr. B. Reitzner Tal 13**
**W-8000 München 2(DE)**

**EP 0 144 506 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

In den letzten Jahren wurde der Methanolspaltung eine wachsende Aufmerksamkeit gewidmet. Das Synthesegas, zusammengesetzt aus etwa 33 Vol.-% CO und 66 Vol.-% $H_2$, kann gemäß der Gleichung (1) gewonnen werden.

$$CH_3OH \rightleftarrows CO + H_2 \qquad (1)$$

Die Reaktion (1) ist stark endotherm und kann bei Temperaturen über 200 °C unter atmosphärischem oder erniedrigtem Methanoldruck mit Hilfe gewisser heterogener Katalysatoren durchgeführt werden. So untersuchten z.B. Inui und Mitarbeiter; J.Japan Petrol, Inst. 25, 121 (1982) die Wirkung von Ni-, Rh- oder Ru- auf -$SiO_2$-Katalysatoren im Vergleich zu kommerziellen $ZnO$-$Cr_2O_3$-Methanolsynthesekatalysatoren. Die besten Ergebnisse wurden mit einem Ni-Ru-$La_2O_3$- auf -$SiO_2$-Katalysator erzielt. Dieser Katalysator war dem kommerziellen $ZnO$-$Cr_2O_3$-Katalysator weit überlegen. Allerdings kam es bei der Erhöhung des Methanolumsatzes (über 30 °C) zur Verkokung des Katalysators gemäß den Gleichungen (2) und(3)

$$2\ CH_3OH \longrightarrow C + CO_2 + 4H_2 \qquad (2)$$
$$CH_3OH \longrightarrow C + H_2 + H_2O \qquad (3)$$

Eine weitere technische interessante Reaktion ist die Methanoldampfreformierung, die gemäß Gleichung (4) verläuft und zu einem Gasgemisch aus 25 Vol.-% $CO_2$ und 75 Vol.-% $H_2$ führt.

$$CH_3OH + H_2O \rightleftarrows CO_2 + 3H_2 \qquad (4)$$

Diese endotherme Reaktion kann auch als eine Kombination der Methanolspaltung (1) und der CO-Konvertierung gemäß Gleichung (5) angesehen werden.

$$CO + H_2O \rightleftarrows CO_2 + H_2 \qquad (5)$$

Die Methanolreformierung fand bisher ein größeres Interesse als die Methanolspaltung. Um die Reaktion des Methanols mit Wasserdampf zu beschleunigen, wurden Cu-haltige Katalysatoren, vorzugsweise auf $Al_2O_3$, $SiO_2$ oder $Al_2O_3$-$SiO_2$, angewendet (T. Inui und Mitarbeiter, J.Japan Petrol. Inst. 25, 63 (1982), K. Takahashi und Mitarbeiter Appl. Catal. 2, 363 (1982)).

Zur gleichzeitigen Methanolspaltung und Methanolreformierung wurden neben Kupferkatalysatoren auch Co-, Ni-, Fe- und Edelmetallkatalysatoren auf $Al_2O_3$ empfohlen (J.Fuel Soc. Japan 59, 40 (1980)). Diese Katalysatoren haben jedoch nur eine verhältnismäßig geringe thermische Stabilität und neigen zur Verkokung entsprechend den vorstehend angegebenen Gleichungen (2) und (3), insbesondere, wenn der Wassergehalt des Methanols niedrig ist.

Der Erfindung liegt die Aufgabe zugrunde, einen Katalysator zu schaffen, der gleich gut unter den Bedingungen der Methanolspaltung (Gleichung 1) und der Methanoldampfreformierung (Gleichung 4) einsetzbar ist, so daß der Prozeß auf einfache Weise durch Variieren des Wasserdampfgehalts des eingesetzten Methanols entweder in Richtung Synthesegaserzeugung oder in Richtung Wasserstofferzeugung gelenkt werden kann, ohne daß der Katalysator ausgewechselt werden muß. Ein solcher Katalysator soll unter wechselnden Verfahrensbedingungen eine gute Stabilität haben und auch ohne Wasserdampfzusatz bzw. bei niedrigen Wasserdampfgehalten, d.h. unter den Bedingungen der Methanolspaltung gemäß Gleichung (1), keine Koksbildungen hervorrufen.

Gegenstand der Erfindung ist somit ein Katalysator zur Herstellung von Synthesegas bzw. von Wasserstoff aus wasserhaltigem Methanol durch Spaltung bzw. Wasserdampfreformierung, der dadurch gekennzeichnet ist, daß

(A) eine Metallkomponente aus einem oder mehreren Edelmetallen der 8. Nebengruppe des Periodensystems in einer Konzentration von 0.15 bis 0,5 Gew.-%, bezogen auf den gesamten Katalysator, auf einem Trägermaterial, im wesentlichen bestehend aus

$B_1$) $TiO_2$ oder $CeO_2$, gegebenenfalls im Gemisch mit anderen feuerfesten Metalloxiden und/oder hydraulischen Bindern in einer Konzentration von 5 bis 25 Gew.-%, bezogen auf den gesamten Katalysator, oder $B_2$) von $TiO_2$ , das auf die Oberfläche eines vorgeformten feuerfesten Materials aus Keramik aufgebracht ist.> Der erfindungsgemäße Katalysator ermöglicht es, den Prozeß entweder unter den Bedingungen der Methanolspaltung (Synthesegaserzeugung) oder unter den Bedingungen der Methanoldampfreformierung (Erzeugung von Wasserstoff) zu führen, wobei lediglich der Anteil des zugesetzten Wasserdampfes variiert wird. Der erfindungsgemäße Katalysator ist bei unterschiedlichen Verfahrensbedingungen stabil und neigt unter den Bedingungen der Methanolspaltung nicht zur Koksbildung.

Ferner kann der erfindungsgemäße Katalysator auch in Gegenwart von Sauerstoff eingesetzt werden, also unter Bedingungen, bei denen die bekannten Kupferkatalysatoren nicht stabil sind. Da die Reaktionen (1) und (4) endotherm sind, ist es in vielen Fällen erwünscht, die Reaktionen in Gegenwart von Sauerstoff durchzuführen, damit ein autothermer Reaktionsverlauf erzielt wird.

Für die technische Anwendung der erfindungsgemäßen Katalysatoren ist es vorteilhaft, daß das Trägermaterial in Form von Formkörpern, wie Tabletten, Kugeln, Ringen oder Waben, vorliegt.

Bei der Metallkomponente handelt es sich um ein oder mehrere Edelmetalle aus der 8. Nebengruppe des Periodensystems, insbesondere Platin und/oder Palladium und/oder Rhodium, wobei auch Legierungen dieser Metalle vorliegen können.

Der Begriff "feuerfeste Metalloxide" ist im weitesten Sinn zu verstehen und umfaßt auch Mischoxide. Vorzugsweise werden als feuerfeste Metalloxide $Al_2O_3$ und/oder $Cr_2O_3$ verwendet.

Zur Erhöhung der Festigkeit der Katalysatoren kann das $TiO_2$ oder $CeO_2$ bzw. ein Gemisch aus $TiO_2$ oder $CeO_2$ und anderen feuerfesten Metalloxiden auch einen hydraulischen Binder, wie Calciumaluminatzement, enthalten.

Die erfindungsgemäßen Katalysatoren werden im allgemeinen wie folgt hergestellt:

Nach der Variante ($B_1$) werden aus $TiO_2$ oder $CeO_2$, gegebenenfalls im Gemisch mit anderen feuerfesten Metalloxiden, durch Verpressen Formkörper, z.B. Tabletten, Kugeln, Ringe oder Waben, hergestellt. Vorzugsweise setzt man dem Titandioxid bzw. dem Gemisch aus Titandioxid und den anderen feuerfesten Metalloxiden vor dem Verpressen den hydraulischen Binder zu. Anschließend wird dem Gemisch Wasser zugesetzt, um den hydraulischen Binder zu aktivieren, worauf durch Verpressen die Formkörper hergestellt werden. Diese werden getrocknet, gegebenenfalls mit Dampf gehärtet, calciniert und mit der Metallkomponente imprägniert.

Um das Verpressen zu erleichtern, setzt man der zu verpressenden Masse Gleitmittel, wie Aluminiumstearat und/oder Graphit, zu.

Nach der Variante ($B_2$) wird das Titandioxid auf die Oberfläche eines vorgeformten, "inerten" feuerfesten Materials, aus Keramik, aufgebracht, worauf der so behandelte Formkörper calciniert und mit der Metallkomponente imprägniert wird. Unter vorgeformter Keramik versteht man beispielsweise die handelsüblichen Keramik-Wabenkörper, die sich durch eine hohe Festigkeit auszeichnen. Das Keramikmaterial besteht beispielsweise aus Kordierit oder Mullit. Als vorgeformte Formkörper können aber auch Tabletten, Kugeln oder Ringe verwendet werden.

Um die Haftfestigkeit des Titandioxids an den vorgeformten Formkörpern zu verbessern, werden die Formkörper vorzugsweise mit Alkoxytitanaten, wie Tetraisopropyltitanat $((CH_3)_2CHO)_4Ti)$ oder Tetra-n-butyltitanat$((n\text{-}C_4H_8O)_4Ti)$ imprägniert. Die Alkoxytitanate werden dann üblicherweise mit Dampf hydrolysiert, worauf sich eine Calcinierung anschließt.

Nach beiden Verfahrensvarianten wird die Imprägnierung des Trägermaterials mit der Metallkomponente unter Verwendung von wasserlöslichen Edelmetallsalzen, insbesondere von $H_2PtCl_6$ oder $(NH_4)_2PtCl_6$ oder den entsprechenden Pd- oder Rh-Salzen durchgeführt. Die so hergestellten Katalysatorvorläufer werden dann getrocknet und calciniert. Die Calcinierung des imprägnierten Trägermaterials wird gewöhnlich bei 450 bis 650 °C, insbesondere bei 550 bis 640 °C, durchgeführt.

Um aus den Edelmetallsalzen die entsprechenden Edelmetalle zu erhalten, werden die calcinierten Katalysatorvorläufer mit Wasserstoff aktiviert, wobei die Aktivierung sofort nach der Calcinierung oder erst im Reaktor vor dem Einsatz erfolgen kann.

Gegenstand der Erfindung ist auch die Anwendung der vorstehend beschriebenen Katalysatoren zur Herstellung von Synthesegas bzw. von Wasserstoff aus wasserhaltigem Methanol, durch Spaltung bzw. Wasserdampfreformierung. Wie aus den Gleichungen (1) und (4) ersichtlich ist, verläuft die Spaltung des Methanols in Abwesenheit von Wasserdampf, während die Wasserdampfreformierung gemäß Gleichung (4) in Anwesenheit von Wasserdampf erfolgt. In Abhängigkeit vom Wasserdampfgehalt des Methanols kann der Prozeß auf einfache Weise so gesteuert werden, daß entweder die eine oder die andere Reaktion überwiegt. Soll reiner Wasserstoff gemäß Gleichung (4) oder ein Synthesegas mit einem Wasserstoffüberschuß erzeugt werden, so wird das gemäß Gleichung (4) gebildete Kohlendioxid in an sich bekannter Weise aus dem Gasgemisch entfernt.

Im allgemeinen wird die Umsetzung des wasserhaltigen Methanols im Temperaturbereich von etwa 300 bis etwa 600 °C unter atmosphärischem oder erniedrigtem Druck durchgeführt, wobei üblicherweise eine Raumgeschwindigkeit von 0,05 bis 20 Liter/h • Liter Katalysator, bezogen auf das wasserhaltige Methanol, angewendet wird. Vorzugsweise wird die Umsetzung im Temperaturbereich von 400 bis 500 °C bei Drucken von etwa 0,1 bis 1 bar, insbesondere von 0,75 bis 1 bar, ausgehend von Methanol mit einem Wassergehalt von 0,5 bis 25 Vol.-%, insbesondere von 2 bis 10 Vol.-%, bei einer Raumgeschwindigkeit von 2 bis 8 Liter/h • Liter Katalysator, bezogen auf das wasserhaltige Methanol, durchgeführt.

Die in den nachstehenden Beispielen angegebenen Versuche wurden in einem konventionellen Metallrohrreaktor (Durchflußsystem) mit tablettiertem (4 × 4 mm) Katalysator (50 ml) oder mit Wabenkeramikkörpern (Durchmesser 17 mm, Länge 150 mm) bei Atmosphärendruck im Temperaturbereich von 300 bis 500 °C durchgeführt. Das Methanol enthielt 1 bis 68 Vol.-% Wasserdampf. Die Raumgeschwindigkeit betrug 1 bis 10 Liter/h • Liter Katalysator. Die durch die Methanolspaltung entstandenen Gase wurden mit Hilfe einer Gasuhr gemessen und gaschromatographisch analysiert.

Das unzersetzte Methanol bzw. ein Gemisch von Methanol und Wasser wurde in einem Kühler kondensiert, gemessen und gaschromatographisch analysiert.

Die Erfindung ist nachstehend anhand der Beispiele in Bezug auf einen Vergleichskatalysator in nichteinschränkender Weise erläutert.

Vergleichsbeispiel

50 ml (58,6 g; 6,3 x 3,2 mm-Tabletten) eines kommerziellen, schon vorreduzierten Niedertemperatur-Wassergas-Shift-Katalysators (Cu0 etwa 35 Gew.-%, Zn0 etwa 65 Gew.-%) wurden 3 Std. bei 300 °C mit Wasserstoff (50 Liter/h in einem Durchflußreaktor aktiviert. Anschließend wurde die Methanolspaltung (ohne $H_2$) mit einer Raumgeschwindigkeit von 2 Liter/h • Liter Kat. bei 300, 350 und 400 °C durchgeführt. Das zu spaltende Methanol enthielt 2,2 Vol.-% $H_2$. Das durch die katalytische Reaktion entwickelte Gas wurde gemessen und gaschromatographisch analysiert (vgl. Tab. II).

Beispiel 1

Ein kommerzielles $TiO_2$ (BET Os = 45 $m^2/g$) wurde nach Zugabe von 8 Gew.% Al-Stearat zu 4.5 x 4.5 mm Tabletten verpreßt und diese 8 Std. auf 640 °C in Luft aufgeheizt, dann 1 Std. auf 640 °C gehalten und anschließend wieder auf Umgebungstemperatur abgekuehlt. Nach einer Impraegnierung mit einer waeßrigen $H_2PtCl_6$-Loesung (bei 25 °C) wurden die Pt-haltigen Tabletten getrocknet (120 °C, 4 h) und bei 400 °C (2 h) nachkalziniert. Der so erhaltene Katalysator (K- 1) enthielt 0.3 Gew.% Pt, seine physikalisch-mechanischen Daten sind in Tab. I zusammengestellt.

50 ml (76,3 g) des Katalysators (K-1) wurden 3 Std. im Wasserstoffstrom (50 Liter /h) in einem Durchflußreaktor auf 400 °C aufgeheizt. Nach Abkühlung auf 300 °C wurde mit der Methanolspaltung analog dem Vergleichsbeispiel begonnen. Die Ergebnisse sind in Tab. II zusammengefaßt.

Beispiel 2

Ein kommerzielles $Ti0_2$ (spez. Oberfläche $O_s$ nach BET = 45 $m^2/g$) wurde mit 25 % Calciumaluminatzement zunächst trocken, dann nach Zugabe von 60 % $H_20$ (bezogen auf die eingesetzte Masse) feucht gemischt; kurz vor Ende des Mischvorganges wurden 3 % Elektrographit zugegeben. Die feuchte Masse wurde in dünner Schicht ausgelegt und luftgetrocknet, bis ein Trockenverlust (TV) bei 120 °C von 8 bis 12 % erreicht war. Dann wurde die Masse zu zylindrischen Tabletten von 4,5 mm Durchmesser und 4,5 mm Höhe verpreßt. Die Tabletten wurden 4 Tage im geschlossenen Gefäß ausgelagert und anschließend im Dampfautoklaven bei 5,5 bar und 155 °C 12 Std. dampfbehandelt. Danach wurden die Tabletten einen Tag offen ausgelagert und schließlich an Luft innerhalb von 3 Std. auf 640 °C aufgeheizt und 1 Std. bei 640 °C gehalten. Nach dem Abkühlen wurde mit einer wäßrigen $H_2PtCl_6$-Lösung imprägniert, die Pt-haltigen Tabletten bei 120 °C (4 Std.) getrocknet und bei 400 °C (2 Std.) recalciniert. Der so erhaltene Katalysator (K-2) enthielt 0,3 Gew.-% Pt, seine physikalisch-mechanischen Daten sind in Tabelle I zusammengefaßt.

50 ml (56,6 g) des Katalysators (K-2) wurden innerhalb von 3 Std. im Wasserstoffstrom (50 Liter/h) im Durchflußreaktor auf 400 °C aufgeheizt. Nach Abkühlung auf 300 °C wurde analog dem Vergleichsbeispiel eine Methanolspaltung durchgeführt.

Die Ergebnisse sind in Tabelle II zusammengefaßt.

Beispiel 2a

Die Herstellung des Katalysators erfolgte wie im Beispiel 2 beschrieben, zur Imprägnierung mit Pt wurde jedoch anstelle der $H_2PtCl_6$-Lösung eine auf pH 10 eingestellte wäßrige Lösung von $(NH_4)_2PtCl_6$ verwendet.

Der so erhaltene Katalysator (K-2a) enthielt 0,3 Gew.-% Pt; seine physikalisch-mechanischen Daten sind in Tabelle I zusammengefaßt.

50 ml (59,0 g) des Katalysators (K-2a) wurden analog Beispiel 1 mit Wasserstoff aktiviert und eine Methanolspaltung durchgeführt.

Die Ergebnisse sind in Tabelle III zusammengefaßt.

Beispiel 4

Die Herstellung des Katalysators erfolgte wie im Beispiel 1 beschrieben. Zur Edelmetallimprägnierung wurde jedoch anstelle der $H_2PtCl_6$-Lösung eine salzsaure wäßrige Lösung von $PdCl_2$ eingesetzt.

Der so erhaltene Katalysator (K-4) enthielt 0,3 Gew.-% Pd; seine physikalisch-mechanischen Daten sind in Tabelle I zusammengefaßt.

50 ml (76,3 g) des Katalysators (K-4) wurden wie im Beispiel 1 mit Wasserstoff aktiviert und eine Methanolspaltung durchgeführt.

Die Ergebnisse sind in Tabelle IV zusammengefaßt.

Beispiel 5

Die Herstellung des Katalysators erfolgte wie im Beispiel 1 beschrieben. Zur Edelmetallimprägnierung wurde anstelle der $H_2PtCl_6$-Lösung jedoch eine wäßrige Lösung von $H_2RhCl_6$ verwendet.

Der so erhaltene Katalysator (K-5) enthielt 0,3 Gew.-% Rh; seine physikalisch-mechanischen Daten sind in Tabelle I zusammengefaßt.

50 ml (71,2 g) des Katalysators (K-5) wurden analog Beispiel 1 mit Wasserstoff aktiviert und eine Methanolspaltung durchgeführt.

Die Ergebnisse sind in Tabelle IV zusammengefaßt.

Beispiel 6

Die Herstellung des Katalysators erfolgte wie im Beispiel 1 beschrieben. Zur Pt-Imprägnierung wurde jedoch eine im Vergleich zu Beispiel 1 halbkonzentrierte wäßrige Lösung von $H_2PtCl_6$ verwendet. Der so erhaltene Katalysator (K-6) enthielt 0,15 Gew.-% Pt; seine physikalischmechanischen Daten sind in Tabelle I zusammengefaßt.

50 ml (69,3 g) des Katalysators (K-6) wurden analog Beispiel 1 mit Wasserstoff aktiviert und eine Methanolspaltung durchgeführt.

Die Ergebnisse sind in Tabelle V zusammengefaßt.

Beispiel 7

Die Herstellung des Katalysators erfolgte wie im Beispiel 1 beschrieben. Zur Pt-Imprägnierung wurde jedoch eine im Vergleich zu Beispiel 1 auf das Vierfache verdünnte wäßrige Lösung :von $H_2PtCl_6$ verwendet.

Der so erhaltene Katalysator (K-7) enthielt 0,075 Gew.-% Pt; in Tabelle I sind seine physikalisch-mechanischen Daten zusammengefaßt.

50 ml (70,5 g) des Katalysators (K-7) wurden analog Beispiel 1 mit Wasserstoff aktiviert und eine Methanolspaltung durchgeführt.

Die Ergebnisse sind in Tabelle V zusammengefaßt.

Beispiel 8

Ein kommerzielles $CeO_2$ (BET Os = 43 $m^2/g$) wurde nach Zugabe von 8 Gew.% Al-Stearat zu 4,5 x 4,5 mm Tabletten verpreßt und diese 8 Std. auf 640° C in Luft aufgeheizt, dann 1 Std. auf 640° C gehalten und anschließend wieder auf Umgebungstemperatur abgekühlt. Nach der Imprägnierung mit einer wäßrigen $H_2PtCl_6$-Lösung (bei 25° C) wurden die Pt-haltigen Tabletten getrocknet (120° C, 4 h) und bei 400° C (2 h) nachcalciniert. Der so erhaltene Katalysator (K-8) enthielt 0,3 Gew.% Pt. Seine physikalisch-mechanischen Daten sind in Tabelle 1 zusammengestellt.

50 ml (92,5 g) des Katalysators (K-8) wurden 3 Std. im Wasserstoffstrom (50 1/h) in einem Durchflußreaktor auf 400° C aufgeheizt. Nach Abkühlung auf 300° C wurde mit der Methanolspaltung analog dem Vergleichsbeispiel begonnen. Die Ergebnisse sind in Tabelle II zusammengefaßt.

Beispiel 9

Ein kommerzieller Wabenkeramik-Körper mit quadratischen Öffnungen von 1,5 mm Seitenlänge wurde bei Raumtemperatur 30 min. in Tetraisopropyltitanat (TIPT) getaucht.

Danach wurde der Träger im Dampfautoklaven bei 5,5 bar und 155° C 12 Std. zur Hydrolyse des TiPT dampfbehandelt. Anschließend wurde im Muffelofen bei 600° C (2 Std.) calciniert; der Wabenkeramik-Träger enthielt nach dieser Behandlung 6 Gew.-% $TiO_2$.

Zur Pt-Imprägnierung wurde der $TiO_2$-haltige Träger mit einer wäßrigen Lösung von $H_2PtCl_6$ getränkt, vorsichtig getrocknet und bei 400° C (2 Std.) recalciniert.

Der so erhaltene Katalysator (K-$^9$) enthielt 0,3 % Pt; seine physikalisch-mechanischen Daten sind in Tabelle I zusammengefaßt.

50 ml (17,9 g) des Katalysators (K-9) wurden, wie im Beispiel 1 beschrieben, mit Wasserstoff aktiviert und eine Methanolspaltung durchgeführt.

Die Ergebnisse sind in Tabelle VI zusammengefaßt.

Tabelle I

Physikalisch-Mechanische Daten

| Kat. Nr. | Format | BET-Os ($m^2/g$) | SG (g/l) | SDF (kg) | PV (ml/g) | Zusammensetzung (Gew.%) |
|---|---|---|---|---|---|---|
| VK-1 | 6x3 mm Tabl. | 49 | 1146 | 8.1 | 0.24 | CuO (35) ZnO (65) |
| K -1 | 4.5x4.5mm Tabl. | 40 | 1426 | 17.3 | 0.13 | $TiO_2$ |
| K -2 | 4.5x4.5mm Tabl. | 15 | 1131 | 39.0 | 0.22 | $TiO_2$(75) Ca-Al-Zement |
| K -2a | 4.5x4.5mm Tabl. | 48 | 1180 | 34.5 | 0.20 | $TiO_2$(75) Ca-Al-Zement |
| K -4 | 4.5x4.5mm Tabl. | 19 | 1525 | 24.6 | 0.13 | $TiO_2$ |
| K -5 | 4.5x4.5mm Tabl. | 21 | 1423 | 15.1 | 0.16 | $TiO_2$ |
| K -6 | 4.5x4.5mm Tabl. | 20 | 1385 | 20.4 | 0.19 | $TiO_2$ |
| K -7 | 4.5x4.5mm Tabl. | 20 | 1410 | 20.3 | 0.15 | $TiO_2$ |
| K -8 | 4.5x4.5mm Tabl. | 47 | 1850 | 12.5 | 0.12 | $CeO_2$ |
| K -9 | Wabenkeramik | 8 | 358 | - | 0.14 | $TiO_2$ (6.1) |

Anmerkungen:

BET-Os = spez.Oberflaeche nach BET

SG = spez. Gewicht

SDF = Seitendruckfestigkeit

PV = Porenvolumen

**Tabelle II**

Methanolspaltung

| Katalysator | T °C | Gasmenge | Zusammensetzung | (Vol.%) | | | Kondensat |
|---|---|---|---|---|---|---|---|
| | | l/h(25°C) | CO | $H_2$ | $CO_2$ | $CH_4$ | ml/h |
| VK-1 | 300 | 72 | 20.1 | 73.1 | 6.6 | 0.20 | 59 |
| | 350 | 125 | 27.1 | 68.4 | 4.1 | 0.34 | 30 |
| | 400 | 167 | 29.0 | 67.1 | 3.4 | 0.50 | 7 |
| K-1 | 300 | 85 | 26.7 | 66.4 | 4.4 | 2.5 | 52 |
| | 350 | 156 | 28.6 | 65.4 | 3.5 | 2.5 | 12 |
| | 400 | 181 | 28.5 | 65.1 | 3.4 | 3.0 | 0 |
| K-2 | 300 | 46 | 29.9 | 66.2 | 2.9 | 1.0 | 73 |
| | 350 | 95 | 30.0 | 66.6 | 2.4 | 1.0 | 46 |
| | 400 | 150 | 30.0 | 66.8 | 2.1 | 1.1 | 16 |
| K-8 | 300 | 64 | 25.6 | 71.0 | 3.0 | 0.4 | 63 |
| | 350 | 137 | 28.4 | 68.2 | 3.0 | 0.4 | 20 |
| | 400 | 182 | 29.1 | 67.8 | 2.6 | 0.5 | 0 |
| Fuer 100% Umsatz | | 181.2 | 31.2 | 67.2 | 1.6 | - | - |

Kat.: 50 ml, 4.5x4.5 mm Tabletten, Feed: Methanol mit 2.2 Vol.% $H_2O$, 100 ml/h

Tabelle III

Methanolspaltung (Vergleich zwischen Katalysatoren die mit $H_2PtCl_6$ oder Pt-Amminkomplex hergestellt worden sind)

| Katalysator | T °C | Gasmenge 1/h (25°C) | Zusammensetzung (Vol. %) CO | $H_2$ | $CO_2$ | $CH_4$ | Kondensat ml / h |
|---|---|---|---|---|---|---|---|
| K-2 | 300 | 46 | 29.9 | 66.2 | 2.9 | 1.0 | 73 |
| | 350 | 95 | 30.0 | 66.6 | 2.4 | 1.0 | 46 |
| | 400 | 150 | 30.0 | 66.8 | 2.1 | 1.1 | 16 |
| K-2a | 300 | 45 | 31.0 | 65.7 | 2.2 | 1.1 | 74 |
| | 350 | 85 | 31.0 | 65.7 | 2.1 | 1.2 | 51 |
| | 400 | 154 | 29.8 | 66.7 | 2.0 | 1.5 | 13 |
| Für 100% Umsatz | | 181.2 | 31.2 | 67.2 | 1.6 | - | - |

Kat.: 50 ml, 4.5x4.5 mm Tabletten, Feed: Methanol mit 2.2 Vol.% $H_2O$, 100 ml/h

Tabelle 10

Methanolspaltung (Vergleich zwischen Pt-, Pd- und Rh-haltigen Katalysatoren)

| Katalysator | T °C | Gasmenge 1/h (25°C) | Zusammensetzung (Vol.%) CO | $H_2$ | $CO_2$ | $CH_4$ | Kondensat ml/h |
|---|---|---|---|---|---|---|---|
| K-1 | 300 | 85 | 26.7 | 66.4 | 4.4 | 2.5 | 52 |
| | 350 | 156 | 28.6 | 65.4 | 3.5 | 2.5 | 12 |
| | 400 | 181 | 28.5 | 65.1 | 3.4 | 3.0 | 0 |
| K-4 | 300 | 36 | 23.6 | 59.2 | 5.7 | 11.5 | 79 |
| | 350 | 102 | 24.9 | 57.0 | 6.0 | 12.1 | 42 |
| | 400 1) | 71 | 23.3 | 60.7 | 3.7 | 12.3 | 59 |
| | 400 2) | 40 | 18.7 | 65.6 | 2.2 | 13.5 | 76 |
| K-5 | 300 | 58 | 24.1 | 66.1 | 6.1 | 3.7 | 66 |
| | 350 | 136 | 25.2 | 64.1 | 5.7 | 5.0 | 23 |
| | 400 | 181 | 24.2 | 63.6 | 6.5 | 5.7 | 0 |
| Für 100% Umsatz | | 181.2 | 31.2 | 67.2 | 1.6 | - | - |

1) 2h Laufzeit
2) 3 1/2 h Laufzeit, instabil

Kat.: 50 ml, 4.5x4.5 mm Tabletten, Feed: Methanol mit 2.2 Vol.% $H_2O$, 100 ml/h

Tabelle V

<u>Methanolspaltung</u> (Einfluß der Pt-Konzentration)

| Katalysator | T °C | Gasmenge l/h (25°C) | Zusammensetzung CO | (Vol.%) $H_2$ | $CO_2$ | $CH_4$ | Kondensat ml/h |
|---|---|---|---|---|---|---|---|
| K-1 | 300 | 85 | 26.7 | 66.4 | 4.4 | 2.5 | 52 |
| | 350 | 156 | 28.6 | 65.4 | 3.5 | 2.5 | 12 |
| | 400 | 181 | 28.5 | 65.1 | 3.4 | 3.0 | 0 |
| K-6 | 300 | 85 | 27.3 | 66.5 | 4.0 | 2.2 | 51 |
| | 350 | 155 | 29.5 | 65.6 | 2.7 | 2.2 | 13 |
| | 400 | 181 | 29.2 | 65.5 | 2.9 | 2.4 | 0 |
| K-7 | 300 | 61 | 28.7 | 65.6 | 3.7 | 2.0 | 65 |
| | 350 | 128 | 30.6 | 65.2 | 2.3 | 1.9 | 28 |
| | 400 | 181 | 30.7 | 64.9 | 2.2 | 2.2 | 0 |
| Für 100% Umsatz | | 181.2 | 31.2 | 67.2 | 1.6 | - | - |

Kat.:.50 ml, 4.5x4.5 mm Tabletten, Feed: Methanol mit 2.2 Vol.% $H_2O$, 100 ml/h

**Tabelle VI**

Methanolspaltung (Vergleich zwischen verschiedenen Katalysatorformen)

| Katalysator | T °C | Gasmenge 1/h (25°C) | Zusammensetzung (Vol.%) CO | $H_2$ | $CO_2$ | $CH_4$ | Kondensat ml/h |
|---|---|---|---|---|---|---|---|
| K-1 | 300 | 85 | 26.7 | 66.4 | 4.4 | 2.5 | 52 |
| (Tabletten) | 350 | 156 | 28.6 | 65.4 | 3.5 | 2.5 | 12 |
| | 400 | 181 | 28.5 | 65.1 | 3.4 | 3.0 | 0 |
| K-9 | 300 | 33 | 33.0 | 65.3 | 0.6 | 1.1 | 80 |
| (Wabenkeramik) | 350 | 73 | 32.9 | 65.2 | 0.6 | 1.3 | 58 |
| | 400 | 120 | 32.7 | 65.1 | 0.7 | 1.5 | 32 |
| Für 100% Umsatz | | 181.2 | 31.2 | 67.2 | 1.6 | - | - |

Feed: Methanol mit 2.2 Vol.% $H_2O$, 100 ml/h

Tabelle VII

Methanolspaltung (Einfluß der Methanolraumgeschwindigkeit)

| LHSV | T °C | Gasmenge l/h (25°C) | Zusammensetzung (Vol.%) CO | $H_2$ | $CO_2$ | $CH_4$ | Kondensat ml/h |
|---|---|---|---|---|---|---|---|
| 2 | 300 | 85 | 27.3 | 66.5 | 4.0 | 2.2 | 51 |
| 2 | 350 | 155 | 29.5 | 65.6 | 2.7 | 2.2 | 13 |
| 2 | 400 | 181 | 29.2 | 65.5 | 2.9 | 2.4 | 0 |
| 100% Umsatz | | 181.2 | 31.2 | 67.2 | 1.6 | - | - |
| 4 | 400 | 283 | 31.3 | 64.7 | 1.9 | 2.1 | 20 |
| Für 100% Umsatz | | 362.4 | 31.2 | 67.2 | 1.6 | - | - |

Katalysator: K-6, 50 ml, 4.5x4.5 mm Tabletten, Feed: Methanol mit 2.2 Vol.% $H_2O$, 100 ml/h.

**Tabelle VIII**

<u>Methanolspaltung und Reformierung</u> (Einfluß des Wassergehalts im Methanol auf die Gaszusammensetzung und die erzeugte Gasmenge)

| $H_2O$-Gehalt in Methanol (Vol.%) | T °C | Gasmenge l/h (25°C) | Zusammensetzung (Vol.%) CO | $H_2$ | $CO_2$ | $CH_4$ | Kondensat ml/h | $H_2O$-Gehalt (%) |
|---|---|---|---|---|---|---|---|---|
| 2.0 | 350 | 156 | 28.6 | 65.4 | 3.5 | 2.5 | 12 | 23.0 |
| ($H_2O/CH_4OH$ Mol.V. = 0.04) | 400 | 181 | 28.5 | 65.1 | 3.4 | 3.0 | - | - |
| 41.3 | 350 | 131 | 9.4 | 72.0 | 17.5 | 1.1 | 25 | 86.0 |
| ($H_2O/CH_4OH$ Mol.V. = 1.56) | 400 | 145 | 7.4 | 73.2 | 18.4 | 1.0 | 22 | 98.0 |
| 68.0 | 350 | 78.0 | 1.8 | 75.4 | 22.5 | 0.3 | 53 | 99.9 |
| ($H_2O/CH_3OH$ Mol.V. = 4.73 | 400 | 78.2 | 1.5 | 75.1 | 22.8 | 0.6 | 54 | 100.0 |

Katalysator: K-1, 50 ml 4.5x4.5 mm Tabletten, LHSV = 2 ($CH_3OH+H_2O$)

## Ansprüche

1. Katalysator zur Herstellung von Synthesegas bzw. von Wasserstoff aus wasserhaltigem Methanol durch Spaltung bzw. Wasserdampfreformierung, gekennzeichnet durch
   A) eine Metallkomponente aus einem oder mehreren Edelmetallen der 8. Nebengruppe des Periodensystems in einer Konzentration von 0,15 bis 0,5 Gew.-%, bezogen auf den gesamten Katalysator, auf einem Trägermaterial, im wesentlichen bestehend aus
   $B_1$) $TiO_2$ oder $CeO_2$, gegebenenfalls im Gemisch mit anderen feuerfesten Metalloxiden und/oder hydraulischen Bindern in einer Konzentration von 5 bis 25 Gew.-%, bezogen auf den gesamten Katalysator, oder
   $B_2$) von $TiO_2$ , das auf die Oberfläche eines vorgeformten feuerfesten Materials aus Keramik aufgebracht ist.

2. Katalysator nach Anspruch 1, dadurch gekennzeichnet, daß das Trägermaterial in Form von Tabletten, Kugeln, Ringen oder Waben vorliegt.

3. Katalysator nach Anspruch 1 oder 2, dadurch gekennzeichnet, daß die Metallkomponente Platin und/oder Palladium und/oder Rhodium darstellt.

4. Katalysator nach einem der Ansprüche 1 bis 3, dadurch gekennzeichnet, daß er als feuerfeste Metalloxide $Al_2O_3$ und/oder $Cr_2O_3$ und als hydraulischen Binder Calciumaluminatzement enthält.

5. Verfahren zur Herstellung des Katalysators nach einem der Ansprüche 1 (Variante $B_1$) und 2 bis 4, dadurch gekennzeichnet, daß man aus $TiO_2$ oder $CeO_2$ , gegebenenfalls im Gemisch mit anderen feuerfesten Metalloxiden durch Verpressen Formkörper herstellt, diese calciniert und mit der Metallkomponente imprägniert.

6. Verfahren nach Anspruch 5, dadurch gekennzeichnet, daß man dem Titandioxid hydraulischen Binder zusetzt, nach Wasserzugabe durch Verpressen Formkörper herstellt, diese trocknet, calciniert und mit der Edelmetallkomponente imprägniert.

7. Verfahren nach Anspruch 5 oder 6, dadurch gekennzeichnet, daß man der zu verpressenden Masse Gleitmittel, wie Aluminiumstearat und/oder Graphit, zusetzt.

8. Verfahren zur Herstellung des Katalysators nach einem der Ansprüche 1 (Variante $B_2$) und 2 bis 4, dadurch gekennzeichnet, daß man $TiO_2$ auf die Oberfläche eines vorgeformten feuerfesten Materials aus Keramik aufbringt, den so behandelten Formkörper calciniert und mit der Metallkomponente imprägniert.

9. Verfahren nach Anspruch 8, dadurch gekennzeichnet, daß man das $TiO_2$ durch Imprägnierung der Formkörper mit Alkoxytitanaten, anschließender Hydrolyse und Calcinierung aufbringt.

10. Verfahren nach einem der Ansprüche 8 oder 9, dadurch gekennzeichnet, daß man das $TiO_2$ auf vorgeformte Kugeln, Tabletten, Ringe oder Waben aus Keramik aufbringt.

11. Verfahren nach einem der Ansprüche 5 bis 10, dadurch gekennzeichnet, daß man die Imprägnierung mit der Edelmetallkomponente unter Verwendung von wasserlöslichen Edelmetallsalzen, insbesondere von $H_2PtCl_6$ oder $(NH_4)_2PtCl_6$ oder den entsprechenden Pd oder Rh-Salzen durchführt.

12. Verfahren nach einem der Ansprüche 5 bis 11, dadurch gekennzeichnet, daß man die Calcinierung des mit der Edelmetallkomponente imprägnierten Trägermaterials bei 450 bis 650 °C, insbesondere bei 550 bis 640 °C, durchführt.

13. Anwendung der Katalysatoren nach den Ansprüchen 1 bis 4 bzw. der nach den Ansprüchen 5 bis 12

hergestellten Katalysatoren zur Herstellung von Synthesegas bzw. von Wasserstoff aus wasserhaltigem Methanol, durch Spaltung bzw. Wasserdampfreformierung, in Abhängigkeit vom Wasserdampfgehalt des Methanols.

**14.** Anwendung nach Anspruch 13, dadurch gekennzeichnet, daß die Umsetzung des wasserhaltigen Methanols im Temperaturbereich von 300 bis 600 °C unter atmosphärischem oder erniedrigtem Druck bei einer Raumgeschwindigkeit von 0,5 bis 20 Liter/h • Liter Katalysator (bezogen auf das wasserhaltige Methanol) durchgeführt wird.

**15.** Anwendung nach Anspruch 13 oder 14, dadurch gekennzeichnet, daß die Umsetzung im Temperaturbereich von 400 bis 500 °C, bei Drucken von 0,1 bis 1 bar, insbesondere von 0,75 bis 1 bar, ausgehend von Methanol mit einem Wassergehalt von 0,5 bis 25 Vol.-%, insbesondere von 2 bis 10 Vol.-%, bei einer Raumgeschwindigkeit von 2 bis 8 Liter/h • Liter Katalysator (bezogen auf das wasserhaltige Methanol) durchgeführt wird.

## Claims

**1.** A catalyst for the production of synthesis gas and/or hydrogen from methanol containing water by splitting or steam reforming, characterised by

A) a metal component comprising one or more noble metals of Group VIII of the periodic table in a concentration of from 0.15 to 0.5 % by weight of the entire catalyst, on a support material, substantially comprising

$B_1$) $TiO_2$ or $CeO_2$, optionally mixed with other refractory metal oxides and/or hydraulic binders in a concentration of from 5 to 25 % by weight of the entire catalyst, or

$B_2$) $TiO_2$, which is applied to the surface of a preformed refractory ceramic material.

**2.** Catalyst according to Claim 1, characterised in that the support material is present in the form of pellets, spheres, rings or honeycombs.

**3.** Catalyst according to Claim 1 or 2, characterised in that the metal component comprises one or more of platinum, palladium, and rhodium.

**4.** Catalyst according to any one of Claims 1 to 3, characterised in that it contains one or both of $Al_2O_3$ and $Cr_2O_3$ as the refractory metal oxide and calcium aluminate cement as the hydraulic binder.

**5.** A process for the preparation of the catalyst according to any of Claims 1 (variant $B_1$) and 2 to 4, characterised in that moulded bodies are produced by compressing $TiO_2$ or $CeO_2$, optionally mixed with other refractory metal oxides, and these moulded bodies are calcined and impregnated with the metal component.

**6.** A process according to Claim 5, characterised in that hydraulic binders are added to the titanium dioxide and, after the addition of water, moulded bodies are produced by compressing, and the bodies are calcined and impregnated with the noble metal component.

**7.** A process according to Claim 5 or 6, characterised in that mould lubricants, such as aluminium stearate and/or graphite, are added to the compound to be compressed.

**8.** A process for the preparation of the catalyst according to any of Claims 1 (variant $B_2$) and 2 to 4, characterised in that $TiO_2$ is applied to the surface of a preformed ceramic refractory material, and the moulded bodies thus treated are calcined and impregnated with the metal component.

**9.** A process according to Claim 8, characterised in that the $TiO_2$ is applied by impregnating the moulded bodies with alkoxytitanates, by subsequent hydrolysis and calcination.

**10.** A process according to either of Claims 8 or 9, characterised in that the $TiO_2$ is applied to preformed spheres, pellets, rings or honeycombs of ceramic material.

**11.** A process according to any one of Claims 5 to 10, characterised in that the impregnation with the noble metal component is carried out using water-soluble noble metal salts, in particular $H_2PtCl_6$ or $(NH_4)_2PtCl_6$ or the corresponding Pd or Rh-salts.

**12.** A process according to any one of Claims 5 to 11, characterised in that the calcination of the support material impregnated with the noble metal component is carried out at 450 to 650°C, in particular at 550 to 640°C.

**13.** Use of the catalysts according to Claims 1 to 4 or the catalysts prepared according to Claims 5 to 12, for the production of synthesis gas or of hydrogen from methanol containing water, by splitting or steam reforming, depending on the water vapour content of the methanol.

**14.** Use according to Claim 13, characterised in that the conversion of the water-containing methanol is carried out within a temperature range of from 300 to 600°C, under atmospheric or reduced pressure and at a spatial velocity of from 0.5 to 20 litres/h . litre of catalyst (in relation to the water-containing methanol).

**15.** Use according to Claim 13 or 14, characterised in that the conversion is carried out within a temperature range of from 400 to 500°C, at pressures of from 0.1 to 1 bar, in particular from 0.75 to 1 bar, starting from methanol with a water content of from 0.5 to 25 % by volume, in particular 2 to 10 % by volume, at a spatial velocity of from 2 to 8 litres/h . litre of catalyst (in relation to the water-containing methanol).

## Revendications

**1.** Catalyseur pour la fabrication de gaz de synthèse ou d'hydrogène à partir de méthanol aqueux par dissociation ou reformage à la vapeur d'eau, caractérisé par :
(A) un composant métallique à base d'un ou plusieurs métaux nobles du sous-groupe 8 de la Classification Périodique, dans une concentration de 0,15 à 0,5% en poids, par rapport à la totalité du catalyseur, sur une matière de support, essentiellement composée de :
($B_1$) $TiO_2$ ou $CeO_2$, le cas échéant en mélange avec d'autres oxydes métalliques réfractaires et/ou liants hydrauliques, dans une concentration de 5 à 25% en poids, par rapport à la totalité du catalyseur, ou
($B_2$) de $TiO_2$, qui est appliqué sur la surface d'une matière réfractaire préformée en céramique.

**2.** Catalyseur selon la revendication 1, caractérisé par le fait que la matière de support se présente sous la forme de pastilles, de sphères, d'anneaux ou de nids d'abeilles.

**3.** Catalyseur selon la revendication 1 ou 2, caractérisé par le fait que le composant métallique est constitué par du platine et/ou du palladium et/ou du rhodium.

**4.** Catalyseur selon l'une des revendications 1 à 3, caractérisé par le fait qu'il contient, comme oxydes métalliques réfractaires, $Al_2O_3$ et/ou $Cr_2O_3$, et, comme liant hydraulique, du ciment d'aluminate de calcium.

**5.** Procédé de fabrication du catalyseur tel que défini à l'une des revendications 1 (variante $B_1$) et 2 à 4, caractérisé par le fait qu'on prépare des corps moulés par compression, à partir de $TiO_2$ ou $CeO_2$, le cas échéant en mélange avec d'autres oxydes métalliques réfractaires, qu'on les calcine et qu'on les imprègne du composant à base de métal(aux) noble(s).

**6.** Procédé selon la revendication 5, caractérisé par le fait qu'on ajoute un liant hydraulique au dioxyde de titane, qu'on fabrique des corps moulés par compression après addition d'eau, qu'on sèche, qu'on calcine ces derniers et qu'on les imprègne par le composant de métal noble.

**7.** Procédé selon l'une des revendications 5 ou 6, caractérisé par le fait qu'on ajoute à la masse à comprimer, un lubrifiant comme le stéarate d'aluminium et/ou le graphite.

**8.** Procédé de fabrication du catalyseur tel que défini à l'une des revendications 1 (variante $B_2$) et 2 à 4, caractérisé par le fait qu'on applique $TiO_2$ sur la surface d'une matière réfractaire préformée en céramique, qu'on calcine les corps moulés ainsi traités et qu'on les imprègne du composant métallique.

**9.** Procédé selon la revendication 8, caractérisé par le fait qu'on applique $TiO_2$ par imprégnation des corps moulés par des alcoxytitanates, hydrolyse subséquente et calcination.

**10.** Procédé selon l'une des revendications 8 ou 9, caractérisé par le fait qu'on applique le $TiO_2$ sur des sphères, pastilles, anneaux ou nids d'abeilles, préformés, en céramique.

**11.** Procédé selon l'une des revendications 5 à 10, caractérisé par le fait qu'on conduit l'imprégnation par le composant à base de métal(aux) noble(s) avec utilisation de sels solubles dans l'eau de métaux nobles, en particulier de $H_2PtCl_6$ ou $(NH_4)_2PtCl_6$ ou les sels de Pd ou Rh correspondants.

**12.** Procédé selon l'une des revendications 5 à 11, caractérisé par le fait qu'on conduit la calcination de la matière de support imprégnée par le composant à base de métal(aux) noble(s), à une température de 450 à 650 °C, en particulier, de 550 à 650 °C.

**13.** Utilisation des catalyseurs tels que définis à l'une des revendications 1 à 4 ou des catalyseurs préparés conformément aux revendications 5 à 12 pour la fabrication de gaz de synthèse ou d'hydrogène à partir de méthanol aqueux, par dissociation ou reformage à la vapeur d'eau, en fonction de la teneur en vapeur d'eau du méthanol.

**14.** Utilisation selon la revendication 13, caractérisée par le fait que la conversion du méthanol aqueux est conduite dans une plage de température de 300 à 600 °C, à la pression atmosphérique ou sous une pression réduite, à une vitesse spatiale de 0,5 à 20 litres/h•litre de catalyseur (par rapport au méthanol aqueux).

**15.** Utilisation selon la revendication 13 bu 14, caractérisée par le fait que la conversion est conduite dans une plage de température allant de 400 à 500 °C, sous des pressions de $10^4$ à $10^5$ Pa, en particulier, de $7,5.10^4$ à $10^5$ Pa, en partant de méthanol ayant une teneur en eau de 0,5 à 25% en volume, en particulier, de 2 à 10% en volume, à une vitesse spatiale de 2 à 8 litres/h•litre de catalyseur (par rapport au méthanol aqueux).